# EUROPÄISCHE PATENTANMELDUNG

(11) **EP 1 837 682 A2**
(43) Veröffentlichungstag der Anmeldung: **26.09.2007**
(21) Anmeldenummer: 07005423.4
(22) Anmeldetag: 16.03.2007
(51) Int. Cl.: G01S 17/02, G01S 17/42

(54) **Vorrichtung und Verfahren zum Entdecken von optischen Systemen in einem Geländebereich**

(30) Priorität: 23.03.2006 DE 102006013340
(71) Anmelder: Carl Zeiss Optronics GmbH, 73447 Oberkochen (DE)
(72) Erfinder: Haan, Hubertus, Dr., 73450 Neresheim (DE); Kürbitz, Gunther, Dr., 89551 Königsbronn (DE); Schmidt, Herbert, 73460 Hüttlingen (DE)
(74) Vertreter: Lorenz, Markus

(57) **Zusammenfassung**

Eine Vorrichtung (1') zum Entdecken von optischen Systemen (10) in einem Geländebereich umfasst wenigstens:
- eine Laseranordnung mit einer Laserlichtquelle, einem beweglichen Spiegel zum Abtasten des Geländebereichs und einem Photoelement zur Erfassung einer retroreflektierten Laserstrahlung der Laserlichtquelle,
- einen Scan-Position-Sensor zur Erfassung einer Scanrichtung, und
- ein Steuergerät zum Ermitteln der Position eines zu entdeckenden optischen Systems (10) aus einer mittels der Laseranordnung durchgeführten Messung durch Auswerten der Intensität einer von einer optischen Oberfläche des optischen Systems (10) retroreflektierten Laserstrahlung und der zugehörigen, durch den Scan-Position-Sensor erfassten Scanrichtung, wobei das Steuergerät eine elektronische Schnittstelle aufweist, über welche Informationen wenigstens hinsichtlich der Intensität und der Elevation der erfassten retroreflektierten Laserstrahlung an wenigstens eine Anzeigevorrichtung (5,5') übermittelbar sind.

## Beschreibung

Die Erfindung betrifft eine Vorrichtung und ein Verfahren zum Entdecken von optischen Systemen in einem Geländebereich.

Bekannt sind Geräte zur Entdeckung von Scharf- bzw. Heckenschützen (sniper), welche auf dem sogenannten Katzenaugeneffekt beruhen, wobei retroreflektiertes Licht aus den optischen Geräten bzw. Systemen der Schützen detektiert wird. Im Falle eines Zielfernrohrs als optisches System wird die Strahlung beispielsweise an der Strichplatte in dieselbe Richtung reflektiert, aus der die beleuchtende Strahlung kam. Dazu wird in der Regel für die aktive Beleuchtung der zu entdeckenden Optik ein Laserstrahl mit einer entsprechenden Wellenlänge verwendet. Eine Beleuchtung mit visuellem Licht erfolgt in der Regel nicht, da erstens die Augensicherheit mit Laserlicht im visuellen Bereich nicht gewährleistet ist und zweitens das visuelle Licht selbst leicht zu entdecken ist. Es können unter anderem Optiken wie Zielfernrohre, Ferngläser, Periskope oder Wärmebildgeräte erfasst werden. Dabei sind im wesentlichen zwei technische Lösungen bekannt.
1. Die Detektion des ausgesandten Laserstrahls erfolgt mit einer Kamera, welche für Strahlung in dem entsprechenden Wellenlängenbereich des Lasers empfindlich ist. In der Regel ist dies der SWIR-Bereich, so dass ebenfalls eine SWIR-Kamera benutzt wird, um den Retroreflex des Lasers zu erfassen. Derartige Kameras zeigen jedoch bei Dunkelheit lediglich den Retroreflex des Lasers und nicht die gesamte Umgebung. Daher ist man auf eine externe Beleuchtung angewiesen bzw. benötigt eine weitere Kamera (z. B. Wärmebildgerät), welche die Umgebung sichtbar macht. Danach wird dem Benutzer eine Überlagerung der Bilder beider Kameras angezeigt.
2. Bei rein optischen Systemen wird die Anzeige lediglich über ein Aufleuchten einer Leuchtdiode durchgeführt, welche in Flucht auf das zu detektierende Ziel erscheint.

Aus der WO 03/102626 A ist eine Vorrichtung zum Erkennen optischer und optoelektronischer Objekte bekannt. Die Vorrichtung verwendet eine Laserlichtquelle mit in vertikaler Richtung eindimensional aufgeweitetem Lichtaustritt, die auf einen Zielbereich gerichtet ist. Eine vertikal übereinander angeordnete Reihe von Detektoren empfängt das vom Zielbereich reflektierte Licht. Ferner ist ein fernrohrartiges optisches Beobachtungssystem vorgesehen.

Die ältere, nicht vorveröffentlichte DE 10 2005 006 726 zeigt ein Verfahren und eine Vorrichtung zum Entdecken von optischen Systemen, beispielsweise von Schützen in einem Geländebereich. Der Geländebereich wird mittels eines beweglichen Spiegels optisch abgetastet und die Position des Schützen aus einer mittels einer Laseranordnung durchgeführten Messung ermittelt und optisch dargestellt. Die Position des Schützen wird unmittelbar aus der mittels der Laseranordnung durchgeführten Messung durch Auswerten der Intensität eines von einer optischen Oberfläche des Schützen reflektierten Lichtstrahls der Laseranordnung ermittelt und in ein Fernrohr eingespiegelt. Die Vorrichtung weist eine, einen beweglichen Spiegel enthaltende Laseranordnung, ein Steuergerät zum Ermitteln der Position des Schützen sowie eine Vorrichtung zum optischen Anzeigen der Position auf. Dabei ist die Vorrichtung zum optischen Anzeigen ein Fernrohr und es sind Mittel zum Einspiegeln der Position des Schützen in das Fernrohr vorgesehen.

Der vorliegenden Erfindung liegt die Aufgabe zugrunde, eine Vorrichtung und ein Verfahren der eingangs erwähnten Art zu verbessern. Insbesondere sollen eine Vorrichtung und ein Verfahren bereitgestellt werden, die es erlauben mit einem eigenständigen Gerät ein optisches System, insbesondere einen Schützen, bereits vor der Schussabgabe orten zu können und diese Daten einem Bediener komfortabel zur Verfügung zu stellen.

Diese Aufgabe wird bezüglich der Vorrichtung durch die in Anspruch 1 genannten Merkmale gelöst.

Die Aufgabe wird bezüglich des Verfahrens durch die in Anspruch 13 genannten Merkmale gelöst.

Durch die erfindungsgemäßen Maßnahmen wird in einfacher und vorteilhafter Weise eine eigenständige Vorrichtung bzw. Scaneinheit zum Entdecken von optischen Systemen in einem Geländebereich geschaffen. Diese Scaneinheit kann die ermittelten Positionsdaten eines erfassten optischen Systems über eine Schnittstelle weiteren Geräten oder Anzeigevorrichtungen bzw. Kameras zur Verfügung stellen, wodurch die Position unmittelbar einem Bild des Geländebereichs einer Anzeigevorrichtung, welche die Positionsdaten der Schnittstelle entnimmt, überlagert werden kann. Hierbei werden Informationen wenigstens hinsichtlich der Intensität und der Elevation der erfassten retroreflektierten Laserstrahlung übergeben. Dazu ist ein Scan-Position-Sensor vorgesehen. Durch die Verwendung einer Laser-Anordnung ist es möglich, den auf das Vorhandensein von optischen Systemen zu überprüfenden Geländebereich mit geringem Energieverbrauch zu scannen, da nur ein punktförmiger Laserstrahl über den Geländebereich geführt werden muss.

Vorteile bezüglich des erfindungsgemäßen Verfahrens ergeben sich analog und anhand der Beschreibung.

Es ist besonders vorteilhaft, wenn die Vorrichtung über die elektronische Schnittstelle mit einer digitalen Kamera zur Aufnahme des Geländebereichs, welche die Anzeigevorrichtung aufweist, elektrisch verbunden ist, wobei das Sehfeld der Vorrichtung und das Sehfeld der Kamera wenigstens annähernd übereinstimmen, und wobei dem Bild der digitalen Kamera die Informationen hinsichtlich der Intensität und der Elevation der erfassten retroreflektierten Laserstrahlung des zu entdeckenden optischen Systems elektronisch überlagerbar sind.

Zur Beobachtung der Umgebung kann eine beliebige, insbesondere kostengünstige digitale Kamera eingesetzt werden. Diese benötigt nicht dieselbe Wellenlänge wie die der Laseranordnung. Der Retroreflex, häufig auch als "Glint" bezeichnet, kann einem beliebigen Kamerabild elektronisch überlagert werden. Die Scaneinheit sollte innerhalb des Sehfeldes der digitalen Kamera scannen.

Die erfindungsgemäße Vorrichtung zum Entdecken von optischen Systemen in einem Geländebereich und die digitale Kamera sollten einen festen Bezug zueinander aufweisen. Dazu kann in einer vorteilhaften Ausgestaltung der Erfindung die Kamera mechanisch, insbesondere fest mit der Vorrichtung verbunden sein. Alternativ wäre es denkbar, dass wenigstens einem der beiden Geräte die relative Position der Geräte zueinander - auch hinsichtlich des Azimuts - bekannt ist. Und entsprechend erweiterte Positionsdaten insbesondere auch den Azimut des zu entdeckenden optischen Systems übermittelt werden, wobei eine entsprechende Verarbeitung der erweiterten Positionsdaten vorzusehen ist.

Bei einer weiteren bevorzugten Ausführungsform der erfindungsgemäßen Vorrichtung ist der Spiegel ein um eine Schwingachse, insbesondere mittels eines Schwingantriebs, verschwenkbarer Schwingspiegel.

Diese Maßnahme hat den Vorteil, dass der für die vorliegenden Zwecke erforderliche, relativ kleine Elevationsbereich von z. B. 6° bis 10° in einfacher Weise durchlaufen werden kann.

Vorteilhaft ist es, wenn die Schwingachse des Schwingspiegels, insbesondere in einer Gebrauchsstellung der Vorrichtung, eine Horizontalachse ist und die Vorrichtung in Gebrauchsstellung horizontal, insbesondere um 360° verschwenkbar ist.

Dadurch kann der abzutastende Geländebereich schnell und einfach überprüft werden, indem der Bediener des Systems bzw. der Vorrichtung beispielsweise manuell einen entsprechenden Horizontalschwenk ausführt. Alternativ oder zusätzlich kann die Vorrichtung mit einer automatischen in 360° horizontal verschwenkbaren Schwenkeinrichtung kombiniert werden. In einer vorteilhaften Ausgestaltung des erfindungsgemäßen Verfahrens kann dann entsprechend die Laseranordnung, der Scan-Position-Sensor und die Anzeigevorrichtung zum Scannen des Geländebereichs in einer Horizontalebene synchron verschwenkt werden.

Des Weiteren kann bei kontinuierlichem horizontalen Scannen des Geländebereichs, falls ein potentielles optisches System bzw. ein optoelektronisches System, insbesondere ein Heckenschütze entdeckt wird, ein Alarmsignal ausgegeben werden, wobei festgelegt und in einer Datenbank abgespeichert wird, ob es sich bei dem angezeigten Bild um eine tatsächliche Bedrohung oder lediglich um einen Fehlalarm, beispielsweise durch einen Reflex eines Straßenschilds oder dergleichen, handelt. Bei einem wiederholten Scannen derselben Umgebung kann dann in besonders vorteilhafter Weise nach einem Datenbankabgleich ein erneuter Fehlalarm eventuell unterdrückt werden. Hierfür ist von Vorteil, wenn die Vorrichtung drahtlos mit einem Computer als Anzeigevorrichtung elektrisch verbunden ist.

Vorteilhafte Ausgestaltungen und Weiterbildungen der Erfindung ergeben sich aus den übrigen Unteransprüchen. Nachfolgend ist anhand der Zeichnung prinzipmäßig ein Ausführungsbeispiel der Erfindung beschrieben.

Es zeigt:
- Figur 1: in vergrößertem Maßstab, schematisch und in Seitenansicht eine erfindungsgemäße Vorrichtung; und
- Figur 2: eine stark vereinfachte schematische Darstellung eines automatischen Systems zur Entdeckung von optischen Systemen mit der erfindungsgemäßen Vorrichtung.

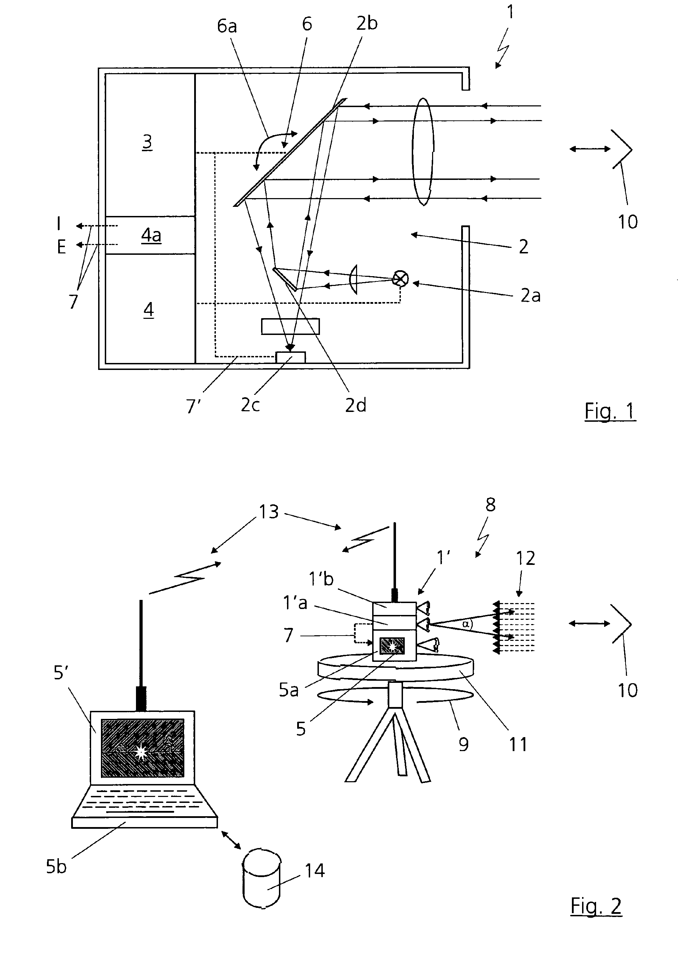

Fig. 1 zeigt eine erfindungsgemäße Vorrichtung 1 zum Entdecken von optischen oder optoelektronischen Objekten bzw. Systemen in einem nicht näher dargestellten Geländebereich.

Die Vorrichtung 1 dient als Scan- bzw. Erkennungseinrichtung zum Entdecken von optischen Systemen in dem Geländebereich. Unter einem "optischen System" sind im Rahmen der vorliegenden Anmeldung optisch ortbare Systeme, beispielsweise feindliche Such- oder Zielsysteme, vor allem aber auch Schützen, insbesondere Heckenschützen zu verstehen.

Ein optisches System 10 bzw. ein Heckenschütze 10 ist in den Figuren 1 und 2 stark vereinfacht bzw. symbolisch als Tripelspiegel angedeutet, welcher sich in dem Geländebereich befindet und auf den die erfindungsgemäße Vorrichtung 1,1' gerichtet ist. Das reflektierende Element kann, allgemeiner gesprochen, ein optisches System 10 mit einer (Zwischen-)Bildebene sein, in der eine plane optische Fläche angeordnet ist, die als Retroreflektor dient. Dies kann beispielsweise ein Zielfernrohr des Heckenschützen 10 sein, in dessen Zwischenbildebene ein Absehen auf einer planparallelen Glasplatte aufgebracht ist. Als reflektierendes Element kommt aber auch ein Auge des Heckenschützen 10 in Betracht.

Die Vorrichtung 1 weist dabei eine Laseranordnung 2 mit einer Laserlichtquelle 2a, einem beweglichen Spiegel 2b zum Abtasten des Geländebereichs und einem Photoelement 2c zur Erfassung einer retroreflektierten Laserstrahlung der Laserlichtquelle 2a auf. Die Laseranordnung 2 und weitere vorteilhafte Ausgestaltungen der Laseranordnung 2 sind bereits in der älteren DE 10 2005 006 726 beschrieben, weshalb im folgenden nicht detailliert darauf eingegangen wird. Des weiteren weist die Vorrichtung 1 einen Scan-Position-Sensor 3 zur Erfassung einer aktuellen Scanrichtung auf.

Darüber hinaus weist die Vorrichtung 1 ein Steuergerät 4 zum Ermitteln der Position eines zu entdeckenden optischen Systems 10 aus einer mittels der Laseranordnung 2 durchgeführten Messung durch Auswerten der Intensität einer von einer optischen Oberfläche des optischen Systems 10 retroreflektierten Laserstrahlung und der zugehörigen, durch den Scan-Position-Sensor 3 erfassten, Scanrichtung auf, wobei das Steuergerät 4 eine elektronische Schnittstelle 4a aufweist, über welche Informationen hinsichtlich der Intensität I und der Elevation E der erfassten retroreflektierten Laserstrahlung an eine Anzeigevorrichtung 5, 5' (siehe Fig. 2) übermittelbar sind.

Wie weiter aus Fig. 1 ersichtlich, ist der Spiegel als Schwingspiegel 2b ausgebildet. Der Schwingspiegel 2b ist um eine zur Zeichenebene der Fig. 1 senkrecht verlaufende, in der normalen Gebrauchsstellung also horizontale Schwingachse 6 verschwenkbar, wie mit einem Doppelpfeil 6a angedeutet.

Wenn im Rahmen eines militärischen Einsatzes ein Benutzer der Vorrichtung 1 sich einem Geländebereich nähert, in welchem feindliche Heckenschützen vermutet werden, dann betrachtet er das fragliche Gelände durch die Anzeigevorrichtung 5 hindurch, indem er die Vorrichtung 1 langsam seitlich über den Geländebereich hinweg schwenkt. Die Vorrichtung 1 überprüft den Geländebereich und liefert über die Schnittstelle 4a Positionsinformationen, d. h. Informationen hinsichtlich der Intensität I und der Elevation E der erfassten retroreflektierten Laserstrahlung, d. h. die Position des Heckenschützen, sobald ein solcher Heckenschütze entdeckt und lokalisiert wurde.

Im vorliegenden Ausführungsbeispiel weist eine digitale Kamera 5a die Anzeigevorrichtung 5 auf. Die Vorrichtung 1 ist über die elektronische Schnittstelle 4a mit der digitalen Kamera 5a elektrisch verbunden (in den Figuren durch eine Leitung 7 gestrichelt angedeutet). Das Sehfeld der Vorrichtung 1 und das Sehfeld der digitalen Kamera 5a stimmen wenigstens annähernd überein. Dem Endbild der Anzeigevorrichtung 5 der digitalen Kamera 5a werden die Informationen hinsichtlich der Intensität I und der Elevation E der erfassten retroreflektierten Laserstrahlung des zu entdeckenden optischen Systems 10 elektronisch überlagert. Im vorliegenden Ausführungsbeispiel ist, wie aus Fig. 2 ersichtlich, die Vorrichtung 1 mechanisch mit der digitalen Kamera 5a verbunden. In weiteren Ausführungsbeispielen könnte die digitale Kamera 5a auch nicht mechanisch mit der Vorrichtung 1 verbunden sein. Um dem Bild der digitalen Kamera 5a die Informationen hinsichtlich der Intensität I und der Elevation E der erfassten retroreflektierten Laserstrahlung des zu entdeckenden optischen Systems 10 elektronisch überlagern zu können, muss jedoch dann die relative Position der Vorrichtung 1 zu der digitalen Kamera 5a bekannt sein und ebenfalls das Sehfeld der Vorrichtung 1 mit dem Sehfeld der digitalen Kamera 5a übereinstimmen.

Wie aus Fig. 1 weiter ersichtlich, wird der Lichtstrahl der Laserlichtquelle 2a mittels eines Umlenkspiegels 2d entlang einer optischen Achse auf den Schwingspiegel 2b und von dort auf den Geländebereich bzw. das optische System 10 gelenkt. Der von dem zu entdeckenden optischen System 10 reflektierte Lichtstrahl wird über den Schwingspiegel 2b entlang der optischen Achse auf das Photoelement 2c gelenkt. Das Photoelement 2c ist über eine Leitung 7' mit dem Steuergerät 4 verbunden. Das Steuergerät 4 enthält insbesondere einen Komparator (nicht dargestellt), dessen Schwellwert derart eingestellt ist, dass eine Unterscheidung zwischen "normal" reflektierten Licht und dem intensiveren, von dem optischen System 10 reflektierten Licht möglich ist. Das Steuergerät 4 verfügt über mehrere Ausgänge, die es über die Leitung 7' zum Beispiel mit einem nicht dargestellten Schwingantrieb des Schwingspiegels 2b, dem Scan-Position-Sensor 3 und der Laserlichtquelle 2a verbinden.

Im vorliegenden Ausführungsbeispiel ist das Photoelement 2c als InGaAs-PIN-Diode ausgebildet. In weiteren Ausführungsbeispielen können aber auch andere bekannte Photoelemente 2c verwendet werden. Bei der Laserlichtquelle 2a handelt es sich um eine InGaAs-Laserdiode. In weiteren Ausführungsbeispielen kann natürlich auch eine andere Laserdiode oder beispielsweise eine GaAs-Laserdiode vorgesehen sein.

In Fig. 2 ist ein eigenständiges bzw. automatisches System 8 zur Entdeckung von optischen Systemen 10 dargestellt. Dazu ist die digitale Kamera 5a, welche die Anzeigevorrichtung 5 aufweist, mit einer weiteren Ausführungsform einer erfindungsgemäßen Vorrichtung 1' mechanisch verbunden. Wie aus Fig. 2 weiter ersichtlich, ist die Vorrichtung 1' und die Kamera 5a auf einer um 360 Grad schwenkbaren (durch Pfeil 9 angedeutet) Schwenkeinrichtung 11 angeordnet. Die Vorrichtung 1' ist koaxial ausgebildet. Dies ist durch zwei separate Teile 1'a und 1'b angedeutet. In dem ersten Teil 1'a der Vorrichtung 1' ist die Laserlichtquelle 2a angeordnet, deren Lichtstrahl entlang einer ersten optischen Achse auf den Geländebereich gelenkt wird (nicht näher dargestellt). In dem zweiten Teil 1'b hingegen wird der von dem optischen System 10 reflektierte Lichtstrahl (in Fig. 2 durch Pfeile 12 angedeutet) separat entlang einer zweiten optischen Achse auf das in Fig. 2 nicht näher dargestellte Photoelement 2c gelenkt. Wie aus Fig. 2 ersichtlich ist, ist die Vorrichtung 1' in Gebrauchsstellung horizontal um 360 Grad verschwenkbar. D. h. im vorliegenden Ausführungsbeispiel, dass die Laseranordnung 2, der Scan-Position-Sensor 3 und die Anzeigevorrichtung 5 der digitalen Kamera 5a zum Scannen des Geländebereichs in einer Horizontalebene synchron verschwenkt werden. Mit der Vorrichtung 1' kann ein Elevationsbereich α von ca. 6 bis ca. 10 Grad durchlaufen werden. Um größere Elevationen abzudecken, könnte in einem weiteren Ausführungsbeispiel die Schwenkeinrichtung 11 auch neigbar ausgebildet sein.

Dem Bild der digitalen Kamera 5a werden die Informationen hinsichtlich der. Intensität I und der Elevation E der erfassten retroreflektierten Laserstrahlung des Heckenschützen 10 überlagert (siehe in übertriebener Größe dargestellter heller Fleck im zentralen Bereich der Anzeigevorrichtung 5 der digitalen Kamera 5a). Die digitale Kamera 5a kann eine beliebige Wellenlänge haben. Im vorliegenden Ausführungsbeispiel ist die digitale Kamera 5a als Wärmebildgerät ausgebildet. Dieses kann vorzugsweise eine Wellenlänge in einem Bereich von 8 bis 12 µm aufweisen.

Wie aus Fig. 2 weiter ersichtlich, ist die Vorrichtung 1' bzw. deren Steuergerät 4 über eine drahtlose Verbindung 13 (z. B.

Funkverbindungen, Bluetooth oder dergleichen) mit einem Anzeigecomputer 5b, welcher einen Monitor als Anzeigevorrichtung 5' aufweist, verbunden. Bei einem kontinuierlichen horizontalen Scannen des Geländebereichs wird dem Anzeigecomputer 5b bei Entdeckung eines Retroreflexes eines Heckenschützen 10 dessen Intensität I bzw. Stärke und Elevation E aus der Vorrichtung 1' übermittelt. Dieser kann, wie aus Fig. 2 weiter ersichtlich, auf der Anzeigevorrichtung 5' angezeigt und einem Bild des Geländebereichs überlagert werden (siehe heller Fleck im zentralen Bereich des Monitors 5'). Die entsprechende Bedienungssoftware gibt einen Alarm aus und zeigt das Bild auf der Anzeigevorrichtung 5'. Falls es sich bei dem angezeigten Retroreflex um keine Bedrohung durch einen Heckenschützen 10 handelt, kann ein Bediener dies quittieren. Somit wird festgelegt und in einer Datenbank 14 gespeichert, ob es sich bei dem angezeigten Bild (Elevation und Azimut) um ein zu entdeckendes optisches System 10, insbesondere einen Heckenschützen handelt. Sonach kann bei einem wiederholten Scannen derselben Umgebung bzw. desselben Geländebereichs dann in besonders vorteilhafter Weise nach einem Datenbankabgleich ein erneuter Fehlalarm eventuell unterdrückt werden.

## Patentansprüche

1. Vorrichtung (1) zum Entdecken von optischen Systemen (10) in einem Geländebereich wenigstens umfassend:
- eine Laseranordnung (2) mit einer Laserlichtquelle (2a), einem beweglichen Spiegel (2b) zum Abtasten des Geländebereichs und einem Photoelement (2c) zur Erfassung einer retroreflektierten Laserstrahlung der Laserlichtquelle (2a),
- einen Scan-Position-Sensor (3) zur Erfassung einer Scanrichtung, und
- ein Steuergerät (4) zum Ermitteln der Position eines zu entdeckenden optischen Systems (10) aus einer mittels der Laseranordnung (2) durchgeführten Messung durch Auswerten der Intensität einer von einer optischen Oberfläche des optischen Systems (10) retroreflektierten Laserstrahlung und der zugehörigen, durch den Scan-Position-Sensor (3) erfassten Scanrichtung, wobei das Steuergerät (4) eine elektronische Schnittstelle (4a) aufweist, über welche Informationen wenigstens hinsichtlich der Intensität (I) und der Elevation (E) der erfassten retroreflektierten Laserstrahlung an wenigstens eine Anzeigevorrichtung (5,5') übermittelbar sind.

2. Vorrichtung nach Anspruch 1, welche über die elektronische Schnittstelle (4a) mit einer digitalen Kamera (5a) zur Aufnahme des Geländebereichs, welche die Anzeigevorrichtung (5) aufweist, elektrisch verbunden ist (7), wobei das Sehfeld der Vorrichtung (1) und das Sehfeld der digitalen Kamera (5a) wenigstens annähernd übereinstimmen, und wobei dem Bild der digitalen Kamera (5a) die Informationen hinsichtlich der Intensität (I) und der Elevation (E) der erfassten retroreflektierten Laserstrahlung des zu entdeckenden optischen Systems (10) elektronisch überlagerbar sind.

3. Vorrichtung nach Anspruch 2, welche mit der digitalen Kamera (5a) mechanisch verbunden ist.

4. Vorrichtung nach Anspruch 2, bei welcher deren relative Position zu der digitalen Kamera (5a) bekannt ist.

5. Vorrichtung nach einem der Ansprüche 1 bis 4, **dadurch gekennzeichnet, dass** der Spiegel ein um eine Schwingachse (6) verschwenkbarer Schwingspiegel (2b) ist.

6. Vorrichtung nach Anspruch 5, **dadurch gekennzeichnet, dass** die Schwingachse (6) des Schwingspiegels (2b) in einer Gebrauchsstellung der Vorrichtung (1) eine Horizontalachse ist.

7. Vorrichtung nach einem der Ansprüche 1 bis 6, welche in Gebrauchsstellung horizontal, insbesondere um 360° verschwenkbar ist.

8. Vorrichtung nach einem der Ansprüche 1 bis 7, **dadurch gekennzeichnet, dass** der Lichtstrahl der Laserlichtquelle (2a) entlang einer optischen Achse auf den Spiegel (2b) und von dort auf den Geländebereich gelenkt wird, und dass der von dem zu entdeckenden optischen System (10) reflektierte Lichtstrahl über den Spiegel (2b) entlang der optischen Achse auf das Photoelement (2c) gelenkt wird.

9. Vorrichtung nach einem der Ansprüche 1 bis 7, **dadurch gekennzeichnet, dass** der Lichtstrahl der Laserlichtquelle (2a) entlang einer ersten optischen Achse auf den Geländebereich gelenkt wird, und dass der von dem zu entdeckenden optischen System (10) reflektierte Lichtstrahl separat entlang einer zweiten optischen Achse auf das Photoelement (2c) gelenkt wird.

10. Vorrichtung nach einem der Ansprüche 1 bis 9, **dadurch gekennzeichnet, dass** das Photoelement (2c) als PIN-Diode, insbesondere als InGaAs-PIN-Diode ausgebildet ist.

11. Vorrichtung nach einem der Ansprüche 1 bis 10, **dadurch gekennzeichnet, dass** die Laserlichtquelle (2a) eine Laserdiode, insbesondere eine InGaAs-Laserdiode oder eine GaAs-Laserdiode ist.

12. Vorrichtung nach einem der Ansprüche 1 bis 11, welche insbesondere drahtlos mit einem Anzeigecomputer (5b) elektrisch verbunden ist.

13. Verfahren zum Entdecken von optischen Systemen (10) in einem Geländebereich, bei welchem der Geländebereich mittels eines beweglichen Spiegels (2b) optisch abgetastet und die Position des zu entdeckenden optischen Systems (10) aus einer mittels einer Laseranordnung (2) durchgeführten Messung durch Auswerten der Intensität (I) einer von einer optischen Oberfläche des optischen Systems (10) retroreflektierten Laserstrahlung und einer zugehörigen von einem Scan-Position-Sensor (3) erfassten Scanrichtung ermittelt wird, wobei Informationen wenigstens hinsichtlich der Intensität (I) und der Elevation (E) der erfassten retroreflektierten Laserstrahlung über eine Schnittstelle (4a) an wenigstens eine Anzeigevorrichtung (5,5') übermittelt werden.

14. Verfahren nach Anspruch 13, **dadurch gekennzeichnet, dass** eine digitale Kamera (5a) zur Aufnahme des Geländebereichs die Anzeigevorrichtung (5) aufweist und dem Bild der digitalen Kamera (5a) die Informationen hinsichtlich der Intensität (I) und der Elevation (E) der erfassten retroreflektierten Laserstrahlung elektronisch überlagert werden.

15. Verfahren nach Anspruch 13 oder 14, **dadurch gekennzeichnet, dass** der bewegliche Spiegel (2b) um eine Schwingachse (6) verschwenkt wird.

16. Verfahren nach Anspruch 13, 14 oder 15, **dadurch gekennzeichnet, dass** die Laseranordnung (2), der Scan-Position-Sensor (3) und die Anzeigevorrichtung (5) zum Scannen des Geländebereichs in einer Horizontalebene synchron verschwenkt werden.

17. Verfahren nach Anspruch 16, **dadurch gekennzeichnet, dass** bei einem kontinuierlichen horizontalen Scannen des Geländebereichs, wenn ein potentielles optisches System (10) entdeckt wird, ein Alarmsignal ausgegeben wird, wobei festgelegt und in einer Datenbank (14) abgespeichert wird, ob es sich bei dem angezeigten Bild um ein zu entdeckendes optisches System (10) handelt.
